# EUROPEAN PATENT APPLICATION

(11) **EP 4 224 702 A1**
(43) Date of publication of application: **09.08.2023**
(21) Application number: 22193034.0
(22) Date of filing: 31.08.2022
(51) Int. Cl.: H02P 25/16, H02P 25/18, H02M 7/48, H02P 27/06

(54) **MOTOR DRIVING APPARATUS**

(30) Priority: 07.02.2022 KR 20220015597
(71) Applicant: HYUNDAI MOTOR COMPANY, Seoul 06797 (KR); Kia Corporation, Seocho-gu Seoul 06797 (KR)
(72) Inventor: PARK, Nae Chun, 18280 Hwaseong-si, Gyeonggi-do (KR); JANG, Han Geun, 18280 Hwaseong-si, Gyeonggi-do (KR); KIM, In Ho, 18280 Hwaseong-si, Gyeonggi-do (KR); SHIN, Sang Cheol, 18280 Hwaseong-si, Gyeonggi-do (KR); JUNG, Choul Woo, 18280 Hwaseong-si, Gyeonggi-do (KR)
(74) Representative: Isarpatent

(57) **Abstract**

A motor driving apparatus of driving a motor including a plurality of windings corresponding to a plurality of phases, includes a first inverter including first switching elements and including a first direct-current (DC) terminal connected to a battery and a first alternating-current (AC) terminal connected to one ends of the plurality of windings; a second inverter including second switching elements and including a second DC terminal selectively short circuited or opened with the first DC terminal and a second AC terminal connected to another ends of the plurality of windings; a third switching element including one end connected to the first DC terminal and another end connected to the second DC terminal, and configured to selectively short circuit or open the first DC terminal and the second DC terminal; and a controller configured to control ON/OFF states of the first switching elements, the second switching elements and the third switching element based on a required output of the motor.

## Description

### BACKGROUND OF THE PRESENT DISCLOSURE

### Field of the Present Disclosure

The present disclosure relates to a motor driving apparatus, and more particularly, to a motor driving apparatus which is capable of improving inverter efficiency for motor driving by switching a motor driving mode from a Y-connection motor driving mode to an open end winding (OEW) motor driving mode according to a required output of a motor.

### Description of Related art

Generally, a winding of each phase included in a motor has one end connected to an inverter and the other end connected to an end of another winding to form a Y-connection.

When the motor is driven, a switching element in the inverter is turned ON/OFF due to pulse width modulation (PWM) control and applies a line-to-line voltage to a Y-connected winding of the motor to generate an alternating current (AC) current, generating a torque.

Fuel efficiency (or electrical efficiency) of an eco-friendly vehicle, such as an electric vehicle that utilizes such a torque generated by the motor as power, is determined by power conversion efficiency of the inverter-motor. Thus, to improve the fuel efficiency, it is important to maximize the power conversion efficiency of the inverter and the efficiency of the motor.

The efficiency of the inverter-motor system is mainly determined by a voltage utilization rate of the inverter. When an operating point of the vehicle determined by a relationship between a motor speed and a torque is formed in a section in which the voltage utilization rate is high, the fuel efficiency of the vehicle may be improved.

In the present technical field, as a motor driving technology capable of covering both low and high output sections using one motor and improving efficiency of a system is required, a technology for driving one motor in two different modes using two inverters and a mode switching switch has been recently introduced.

Here, because the mode switching switch generally utilizes one switching element corresponding to a winding of each phase included in the motor, switching elements for the mode switching switch are required as many as the number of phases. The increase in the number of switching elements indicates not only that the cost of a power module increases, but also that a gate circuit for driving the mode switching switch becomes to be more complicated.

The information included in this Background of the present disclosure section is only for enhancement of understanding of the general background of the present disclosure and may not be taken as an acknowledgement or any form of suggestion that this information forms the prior art already known to a person skilled in the art.

### BRIEF SUMMARY

Various aspects of the present disclosure are directed to providing a motor driving apparatus which is configured for improving inverter efficiency for motor driving switches a motor driving mode to a Y-connection motor driving mode and an open end winding (OEW) motor driving mode according to a required output of a motor using fewer switching elements.

The technical problems to be solved by the present disclosure are not limited to the above-mentioned technical problems and other technical problems which are not mentioned may be clearly understood by those skilled in the art to which the present disclosure pertains from the following description.

According to one aspect, there is provided a motor driving apparatus of driving a motor including a plurality of windings corresponding to a plurality of phases, respectively, the motor driving apparatus including: a first inverter including a plurality of first switching elements and a first direct-current (DC) terminal connected to a battery and a first alternating-current (AC) terminal connected to one ends of the plurality of windings; a second inverter including a plurality of second switching elements and including a second DC terminal selectively short circuited or opened with the first DC terminal and a second AC terminal connected to another ends of the plurality of windings; a third switching element including one end connected to the first DC terminal and another end connected to the second DC terminal, and configured to selectively short circuit or open the first DC terminal and the second DC terminal; and a controller configured to control ON/OFF states of the first switching elements, the second switching elements and the third switching element based on a required output of the motor.

For example, when a predetermined first condition is satisfied, the controller may turn on the third switching element, perform pulse width modulation (PWM) control on the first switching elements and the second switching element, and drive the motor.

For example, when a predetermined second condition is satisfied, the controller may turn on the third switching element off, turn on a plurality of switching elements corresponding to a bottom phase among the plurality of second switching elements, perform the PWM control on the first switching element, and drive the motor.

For example, due to the third switching element being turned off, the first DC terminal and the second DC terminal may be mutually opened.

For example, as the plurality of switching elements corresponding to the bottom phase are turned on, one end of each of the switching elements corresponding to the bottom phase may be connected to the second AC terminal, and the other end of each thereof may be interconnected by the second DC terminal to form a neutral point.

For example, the third switching element may be provided between a negative node of the first DC terminal and a negative node of the second DC terminal.

According to various aspects of the present disclosure, there is provided a motor driving apparatus of driving a motor including a plurality of windings corresponding to a plurality of phases, respectively, the motor driving apparatus including: a first inverter including a plurality of first switching elements and a first direct-current (DC) terminal connected to a battery and a first alternating-current (AC) terminal connected to one ends of the plurality of windings; a second inverter including a plurality of second switching elements and including a second DC terminal selectively short circuited or opened with the first DC terminal and a second AC terminal connected to another ends of the plurality of windings; a third switching element including one end connected to the first DC terminal and another end connected to the second DC terminal, and configured to selectively short circuit or open the first DC terminal and the second DC terminal; and a controller configured to turn off the third switching element based on a required output of the motor, turn on a plurality of switching elements corresponding to a bottom phase among the plurality of second switching elements to form a Y-connection, and perform pulse width modulation (PWM) control on the plurality of first switching elements to drive the motor in a closed end winding (CEW) mode or configured to turn on the third switching element, and perform PWM control on the plurality of first switching elements and the plurality of second switching elements to drive the motor in an open end winding (OEW) mode.

For example, when the third switching element is turned off, the first DC terminal and the second DC terminal may be mutually opened.

For example, as the plurality of switching elements corresponding to the bottom phase are turned on, one end of each of the switching elements corresponding to the bottom phase may be connected to the second AC terminal, and the other end of each thereof may be interconnected by the second DC terminal to form the Y-connection.

For example, the third switching element may be provided between a negative node of the first DC terminal and a negative node of the second DC terminal.

The methods and apparatuses of the present disclosure have other features and advantages which will be apparent from or are set forth in more detail in the accompanying drawings, which are incorporated herein, and the following Detailed Description, which together serve to explain certain principles of the present disclosure.

### BRIEF DESCRIPTION OF THE DRAWINGS

FIG. 1 is a circuit diagram illustrating a motor driving apparatus according to an exemplary embodiment of the present disclosure;
FIG. 2 is a diagram illustrating an example of open end winding (OEW) mode control of the motor driving apparatus according to an exemplary embodiment of the present disclosure;
FIG. 3 is a diagram illustrating an example of closed end winding (CEW) mode control of the motor driving apparatus according to an exemplary embodiment of the present disclosure; and
FIG. 4 is a diagram illustrating an example of a circuit state when the motor driving apparatus is driven in a CEW mode according to an exemplary embodiment of the present disclosure.

It may be understood that the appended drawings are not necessarily to scale, presenting a somewhat simplified representation of various features illustrative of the basic principles of the present disclosure. The specific design features of the present disclosure as disclosed herein, including, for example, specific dimensions, orientations, locations, and shapes will be determined in part by the particularly intended application and use environment.

In the figures, reference numbers refer to the same or equivalent parts of the present disclosure throughout the several figures of the drawing.

### DETAILED DESCRIPTION

Reference will now be made in detail to various embodiments of the present disclosure(s), examples of which are illustrated in the accompanying drawings and described below. While the present disclosure(s) will be described in conjunction with exemplary embodiments of the present disclosure, it will be understood that the present description is not intended to limit the present disclosure(s) to those exemplary embodiments of the present disclosure. On the other hand, the present disclosure(s) is/are intended to cover not only the exemplary embodiments of the present disclosure, but also various alternatives, modifications, equivalents and other embodiments, which may be included within the spirit and scope of the present disclosure as defined by the appended claims.

Hereinafter, embodiments included in the present disclosure will be described in detail with reference to the drawings. The same reference numerals are provided to the same or similar components regardless of reference numerals, and a repetitive description thereof will be omitted. As used herein, suffixes "module" and "part" for a component of the present disclosure are used or interchangeably used solely for ease of preparation of the present disclosure, and do not have different meanings and each thereof does not function by itself. Furthermore, in the following description of the present disclosure, when a detailed description of a known related art is determined to obscure the gist of the present disclosure, the detailed description thereof will be omitted herein. Furthermore, the accompanying drawings are merely for easy understanding of the exemplary embodiments included in the present disclosure, the technical spirit included in the present disclosure is not limited by the accompanying drawings, and it should be understood to include all modifications, equivalents, and substitutes included in the spirit and scope of the present disclosure.

Terms including ordinal numbers such as first, second, and the like used herein may be used to describe various components, but the various components are not limited by these terms. The terms are used only for distinguishing one component from another component.

When a component is referred to as being "connected" or "coupled" to another component, the component may be directly connected or coupled to another component, but it should be understood that sill another component may be present between the component and another component. On the other hand, when a component is referred to as being "directly connected" or "directly coupled" to another, it should be understood that yet another component may not be present between the component and another component.

Unless the context clearly dictates otherwise, the singular form includes the plural form.

In the present disclosure, the terms "comprising," "having," or the like are used to specify that a feature, a number, a step, an operation, a component, an element, or a combination thereof described herein exists, and they do not preclude the presence or addition of one or more other features, numbers, steps, operations, components, elements, or combinations thereof.

Furthermore, a unit or a control unit included in the names of a motor control unit (MCU), a hybrid control unit (HCU), and the like is a term widely used in the naming of a controller that controls a specific vehicle function and does not refer to a generic function unit. For example, each control unit may include a communication device for communicating with other control units or sensors to control a responsible function, a memory for storing an operating system, a logic command, and input/output information, and one or more processors for performing determination, calculation, and decision which are necessary for controlling the responsible function.

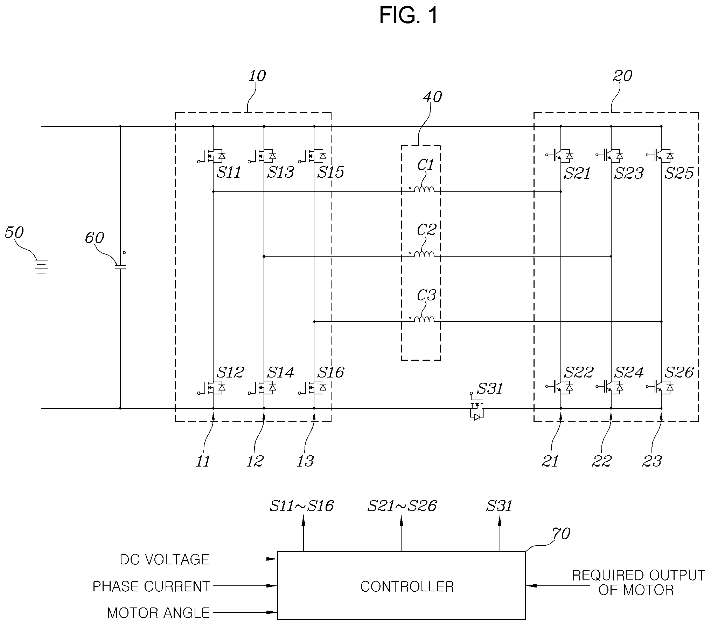

FIG. 1 is a circuit diagram illustrating a motor driving apparatus according to an exemplary embodiment of the present disclosure.

Referring to FIG. 1, the motor driving apparatus according to an exemplary embodiment of the present disclosure is a motor driving apparatus which supplies driving power to a motor 40 including a plurality of windings C1, C2 and C3 corresponding to a plurality of phases, respectively. The motor driving apparatus may include a first inverter 10 which includes a plurality of first switching elements S11, S12, S13, S14, S15 and S16 and is connected to a first terminal of each winding of the motor 40, a second inverter 20 which includes a plurality of second switching elements S21, S22, S23, S24, S25 and S26 and is connected to a second terminal of each winding of the motor 40, a third switching element S31 which selectively short circuits/opens a direct-current (DC) terminal of the first inverter 10 and a DC terminal of the second inverter 20, and a controller 70 which controls ON/OFF states of the first switching elements S11, S12, S13, S14, S15 and S16, the second switching elements S21, S22, S23, S24, S25 and S26, and the third switching element S31 based on a required output of the motor 40.

The first inverter 10 and the second inverter 20 may convert DC power stored in a battery 50 into three-phase alternating-current (AC) power and provide the three-phase AC power to the motor 40 or may convert regenerative braking energy generated due to a regenerative braking torque of the motor 40 to a DC current during regenerative braking to provide the DC current to the battery 50. The conversion between DC power and AC power may be performed by pulse width modulation (PWM) control on the plurality of first switching elements S11, S12, S13, S14, S15 and S16 which are included in the first inverter 10 and the plurality of second switching elements S21, S22, S23, S24, S25 and S26, which are included in the second inverter 20.

The first inverter 10 may have a DC terminal to which a DC voltage formed between positive and negative terminals of the battery 50 is applied and an AC terminal connected to windings C1, C2 and C3 of the motor 40. In the first inverter 10, two nodes connected to the positive terminal and the negative terminal of the battery 50 may be the DC terminal, and three nodes connected to one end of each winding of the motor 40 may be the AC terminal.

Furthermore, the first inverter 10 may include a plurality of legs 11, 12 and 13 to which a DC voltage formed in a DC link capacitor 60 connected between both ends of the battery 50 is applied. The legs 11, 12 and 13 may correspond to the plurality of phases of the motor 40 to form an electrical connection.

The first leg 11 may include the two switching elements S1 and S12 interconnected in series between both ends of the DC capacitor 60, and a connection node of the two switching elements S1 and S12 may be connected to one end of the winding C1 of one phase in the motor 40 to allow AC power corresponding to one of the plurality of phases to be input/output. Similarly, the second leg 12 may include the two switching elements S13 and S14 interconnected in series between both the ends of the DC capacitor 60, and a connection node of the two switching elements S13 and S14 may be connected to one end of the winding C2 of one phase in the motor 40 to allow AC power corresponding to one of the plurality of phases to be input/output. Furthermore, the third leg 13 may include the two switching elements S15 and S16 interconnected in series between both the ends of the DC capacitor 60, and a connection node of the two switching elements S15 and S16 may be connected to one end of the winding C3 of one phase in the motor 40 to allow AC power corresponding to one of the plurality of phases to be input/output.

The second inverter 20 may also have a configuration similar to the configuration of the first inverter 10. That is, the second inverter 20 may have a DC terminal selectively connectable to the DC terminal of the first inverter 10 and an AC terminal connected to the windings C1, C2 and C3 of the motor 40. In the second inverter 20, two nodes including one node selectively connectable to the DC terminal of the first inverter 10 may be a DC terminal, and three nodes at which the second inverter 20 is connected to the other ends of the winding of the motor 40 may be an AC terminal.

The second inverter 20 may include a plurality of legs 21, 22 and 23 to which a DC voltage formed in the DC link capacitor 60 connected between both the ends of the battery 50 is applied. The legs 21, 22 and 23 may correspond to the plurality of phases of the motor 40 to form an electrical connection.

The first leg 21 may include the two switching elements S21 and S22 interconnected in series between both the ends of the DC capacitor 60, and a connection node of the two switching elements S21 and S22 may be connected to the other end of the winding C1 of one phase in the motor 40 to allow AC power corresponding to one of the plurality of phases to be input/output. Similarly, the second leg 22 may include the two switching elements S23 and S24 interconnected in series between both the ends of the DC capacitor 60, and a connection node of the two switching elements S23 and S24 may be connected to the other end of the winding C2 of one phase in the motor 40 to allow AC power corresponding to one of the plurality of phases to be input/output. Furthermore, the third leg 23 may include the two switching elements S25 and S26 interconnected in series between both the ends of the DC capacitor 60, and a connection node of the two switching elements S25 and S26 may be connected to one end of the winding C3 of one phase in the motor 40 to allow AC power corresponding to one of the plurality of phases to be input/output.

The DC terminal of the first inverter 10 and the DC terminal of the second inverter 20 may be selectively short circuited/opened by the third switching element S31. A state of the third switching element S31 may be controlled by the controller 70. For example, one end of the third switching element S31 may be connected to a negative DC terminal (node) of the first inverter 10, and the other end of the third switching element S31 may be connected to a negative DC terminal (node) of the second inverter 20. Because the third switching element S31 serves a switch for switching between driving modes of the motor, which will be described below, the third switching element S31 may be referred to as a "switching switch."

The controller 70 is an element which basically switches the switching elements S11, S12, S13, S14, S15 and S16 and S21, S22, S23, S24, S25 and S26 included in the first inverter 10 and the second inverter 20 through PWM control to allow the motor 40 to be driven based on a required output of the motor 40. In various embodiments of the present disclosure, the controller 70 may determine a driving mode of the motor based on the required output of the motor 40, determine an ON/OFF state of the third switching element S31 according to the driving mode, and switch the switching elements of the inverter activated according to the driving mode through the PWM control.

When the required output of the motor 40 is greater than a predetermined reference value, the controller 70 operates both the first inverter 10 and the second inverter 20 to drive the motor 40 in an open end winding (OEW) mode. In the instant case, the controller 70 may control the third switching element S31 to become an on-state. Accordingly, the DC terminal of the first inverter 10 and the DC terminal of the second inverter 20 are interconnected, the first inverter 10 is connected to one ends of the windings C1, C2 and C3 of the motor 40, and the second inverter 20 is connected to the other ends of the windings C1, C2 and C3 of the motor 40. That is, an electrical connection in an OEW method, in which both ends of each of the windings C1, C2 and C3 of the motor 40 are connected to the first inverter 10 and the second inverter 20, may be formed.

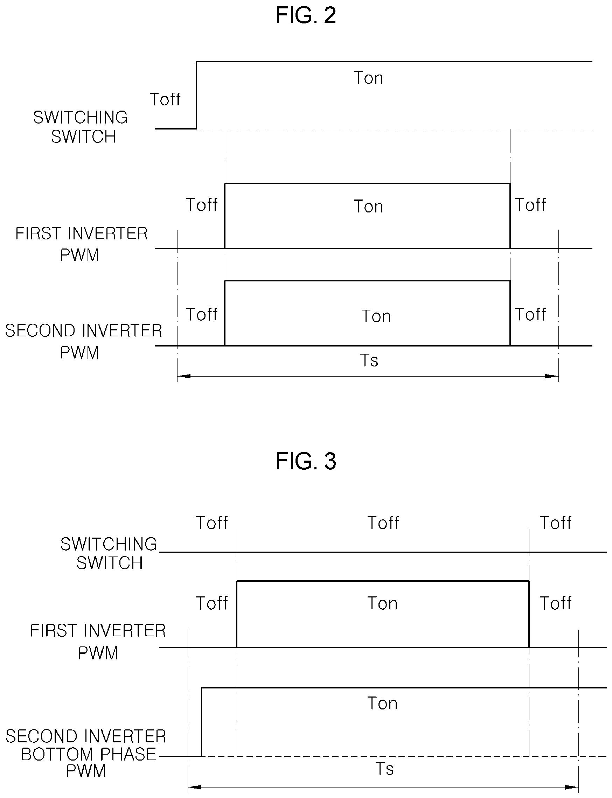

A control form of the controller 70 for the above configuration is shown in FIG. 2.

FIG. 2 is a diagram illustrating an example of open end winding (OEW) mode control of the motor driving apparatus according to an exemplary embodiment of the present disclosure.

Referring to FIG. 2, in the OEW mode, the controller 70 may first turn on the switching switch, that is, the third switching element S31, maintain the connection between the DC terminal of the first inverter 10 and the DC terminal of the second inverter 20, and properly perform the PWM control on the first inverter 10 and the second inverter 20 within a sampling period Ts, driving the motor 40.

For example, the motor driving in the OEW mode may be achieved so that the controller 70 receives the DC voltages of the first inverter 10 and the second inverter 20, a phase current provided to the motor 40, and a motor angle detected by a motor rotor sensor provided in the motor 40 and performs the PWM control on the first switching elements S11, S12, S13, S14, S15 and S16 of the first inverter 10 and the second switching elements S21, S22, S23, S24, S25 and S26 of the second inverter 20. Because various techniques for driving the motor 40 through PWM control on two inverters are already known in the art, a more detailed description of a method of performing PWM control on the inverter, which is performed in the OEW mode, will be omitted herein.

On the other hand, when the required output of the motor 40 is smaller than the predetermined reference value, the controller 70 may perform a closed end winding (CEW) mode in which the controller is configured to perform the PWM control on the switching elements S11, S12, S13, S14, S15 and S16 of the first inverter 10 to drive the motor 40. In the instant case, to form neutral points (i.e., a Y-connection) at the other ends of the windings C1, C2 and C3 of the motor 40, the controller 70 may turn off the third switching element S31 and turn on the switching elements S22, S24, and S26, which correspond to a bottom phase of the second inverter 20.

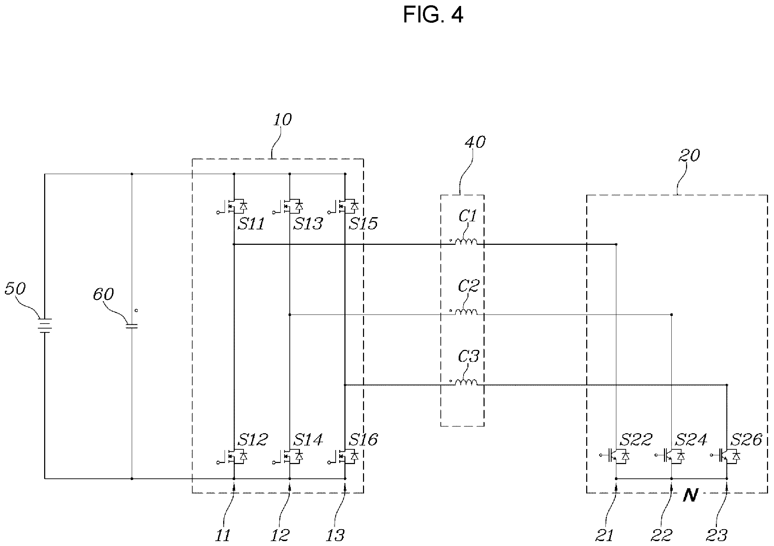

Hereinafter, the CEW mode will be described in more detail with reference to FIG. 3 and FIG. 4.

FIG. 3 is a diagram illustrating an example of CEW mode control of the motor driving apparatus according to an exemplary embodiment of the present disclosure, and FIG. 4 is a diagram illustrating an example of a circuit state when the motor driving apparatus is driven in a CEW mode according to an exemplary embodiment of the present disclosure.

Referring to FIG. 3, in the CEW mode, the controller 70 may maintain the switching switch, that is, the third switching element S31, in an off-state and may turn on the second switching elements S22, S24, and S26 corresponding to the bottom phase of the second inverter 20.

Accordingly, as shown in FIG. 4, due to the maintenance of the off-state of the third switching element S31, the DC terminal of the first inverter 10 and the DC terminal of the second inverter 20 are mutually opened. Furthermore, as the second switching elements S22, S24, and S26 corresponding to the bottom phase of the second inverter 20 are turned on, one end of each of the turned-on second switching elements S22, S24, and S26 may be connected to the other end of the winding of a corresponding phase through the AC terminal of the second inverter 20, and the other ends of the second switching elements S22, S24, and S26 may be interconnected at the negative DC terminal of the second inverter 20 to form a Y connection, that is, a neutral point N.

As described above, because the DC terminal of the first inverter 10 and the DC terminal of the second inverter 20 are mutually opened due to the maintenance of the off-state of the third switching element S31, the neutral point N is disconnected from the DC capacitor 60 so that a floating potential may be generated.

Thereafter, the controller 70 may appropriately perform the PWM control on the first inverter 10 within the sampling period Ts, driving the motor 40 in the CEW mode.

For example, the motor driving in the CEW mode may be achieved so that the controller 70 receives the DC voltage of the first inverter 10, a phase current provided to the motor 40, and a motor angle detected by a motor rotor sensor provided in the motor 40 and performs the PWM control on the first switching elements S 11, S12, S13, S14, S15 and S16 of the first inverter 10. Because various techniques for driving the motor 40 through PWM control on one inverter are already known in the art, a more detailed description of a method of performing PWM control on the inverter, which is performed in the CEW mode, will be omitted herein.

According to the above-described motor driving apparatus according to the exemplary embodiment of the present disclosure, it is possible to switch the driving mode between the CEW mode and the OEW mode according to the required output of the motor through the mode switching switch so that efficient motor driving is possible. Furthermore, because the mode switching switch may be configured using a single switching element, structures of the gate circuit as well as the power module itself may be simplified.

In accordance with a motor driving apparatus, because the mode switching switch may be configured using a single switching element, structures of the gate circuit as well as the power module itself may be simplified.

The effects obtained by the present disclosure is not limited to the above-mentioned effects and other effects which are not mentioned may be clearly understood by those skilled in the art to which the present disclosure pertains from the above description.

The control device may be at least one microprocessor operated by a predetermined program which may include a series of commands for carrying out the method included in the aforementioned various exemplary embodiments of the present disclosure.

The aforementioned invention can also be embodied as computer readable codes on a computer readable recording medium. The computer readable recording medium is any data storage device that can store data which may be thereafter read by a computer system and store and execute program instructions which may be thereafter read by a computer system. Examples of the computer readable recording medium include Hard Disk Drive (HDD), solid state disk (SSD), silicon disk drive (SDD), read-only memory (ROM), random-access memory (RAM), CD-ROMs, magnetic tapes, floppy discs, optical data storage devices, etc and implementation as carrier waves (e.g., transmission over the Internet). Examples of the program instruction include machine language code such as those generated by a compiler, as well as high-level language code which may be executed by a computer using an interpreter or the like.

In various exemplary embodiments of the present disclosure, each operation described above may be performed by a control device, and the control device may be configured by a plurality of control devices, or an integrated single control device.

In various exemplary embodiments of the present disclosure, the control device may be implemented in a form of hardware or software, or may be implemented in a combination of hardware and software.

Furthermore, the terms such as "unit", "module", etc. Included in the specification mean units for processing at least one function or operation, which may be implemented by hardware, software, or a combination thereof.

For convenience in explanation and accurate definition in the appended claims, the terms "upper", "lower", "inner", "outer", "up", "down", "upwards", "downwards", "front", "rear", "back", "inside", "outside", "inwardly", "outwardly", "interior", "exterior", "internal", "external", "forwards", and "backwards" are used to describe features of the exemplary embodiments with reference to the positions of such features as displayed in the figures. It will be further understood that the term "connect" or its derivatives refer both to direct and indirect connection.

The foregoing descriptions of predetermined exemplary embodiments of the present disclosure have been presented for purposes of illustration and description. They are not intended to be exhaustive or to limit the present disclosure to the precise forms disclosed, and obviously many modifications and variations are possible in light of the above teachings. The exemplary embodiments were chosen and described to explain certain principles of the present disclosure and their practical application, to enable others skilled in the art to make and utilize various exemplary embodiments of the present disclosure, as well as various alternatives and modifications thereof. It is intended that the scope of the present disclosure be defined by the Claims appended hereto and their equivalents.

## Claims

1. A motor driving apparatus of driving a motor including a plurality of windings corresponding to a plurality of phases, the motor driving apparatus comprising:
a first inverter including a plurality of first switching elements and a first direct-current (DC) terminal connected to a battery and a first alternating-current (AC) terminal connected to one ends of the plurality of windings;
a second inverter including a plurality of second switching elements and including a second DC terminal selectively short circuited or opened with the first DC terminal and a second AC terminal connected to another ends of the plurality of windings;
a third switching element including one end connected to the first DC terminal and another end connected to the second DC terminal, and configured to selectively short circuit or open the first DC terminal and the second DC terminal; and
a controller configured to control ON/OFF states of the first switching elements, the second switching elements and the third switching element based on a required output of the motor.

2. The motor driving apparatus of claim 1, wherein, when a predetermined first condition is satisfied, the controller is further configured to turn on the third switching element, and perform pulse width modulation (PWM) control on the first switching elements and the second switching elements to drive the motor.

3. The motor driving apparatus of claim 1, wherein, when a predetermined second condition is satisfied, the controller is further configured to turn off the third switching element, turn on a plurality of switching elements corresponding to a bottom phase among the plurality of second switching elements, and to perform pulse width modulation (PWM) control on the first switching elements to drive the motor.

4. The motor driving apparatus of claim 3, wherein, due to the third switching element being turned off, the first DC terminal and the second DC terminal are mutually opened.

5. The motor driving apparatus of claim 3, wherein, as the plurality of switching elements corresponding to the bottom phase are turned on, one end of each of the switching elements corresponding to the bottom phase is connected to the second AC terminal, and another end of each thereof is interconnected by the second DC terminal to form a neutral point.

6. The motor driving apparatus of claim 3, wherein, the third switching element is provided between a negative node of the first DC terminal and a negative node of the second DC terminal.

7. A method of controlling a motor driving apparatus of driving a motor including a plurality of windings corresponding to a plurality of phases, wherein the motor driving apparatus includes a first inverter including a plurality of first switching elements and a first direct-current (DC) terminal connected to a battery and a first alternating-current (AC) terminal connected to one ends of the plurality of windings; a second inverter including a plurality of second switching elements and including a second DC terminal selectively short circuited or opened with the first DC terminal and a second AC terminal connected to another ends of the plurality of windings; and a third switching element including one end connected to the first DC terminal and another end connected to the second DC terminal, and configured to selectively short circuit or open the first DC terminal and the second DC terminal, the method comprising:
turning off, by a controller, the third switching element based on a required output of the motor, turning on, by the controller, a plurality of switching elements corresponding to a bottom phase among the plurality of second switching elements to form a Y-connection, and performing, by the controller, pulse width modulation (PWM) control on the plurality of first switching elements to drive the motor in a closed end winding (CEW) mode; or
turning on, by the controller, the third switching element, and performing, by the controller, PWM control on the plurality of first switching elements and the plurality of second switching elements to drive the motor in an open end winding (OEW) mode.

8. The method of claim 7, wherein, when the third switching element is turned off, the first DC terminal and the second DC terminal are mutually opened.

9. The method of claim 8, wherein, as the plurality of switching elements corresponding to the bottom phase are turned on, one end of each of the switching elements corresponding to the bottom phase is connected to the second AC terminal, and another end of each thereof is interconnected by the second DC terminal to form the Y-connection.

10. The method of claim 8, wherein the third switching element is provided between a negative node of the first DC terminal and a negative node of the second DC terminal.

11. A non-transitory computer readable storage medium on which a program for performing the method of claim 7 is recorded.
